# EUROPÄISCHE PATENTANMELDUNG

(11) **EP 3 978 816 A1**
(43) Veröffentlichungstag der Anmeldung: **06.04.2022**
(21) Anmeldenummer: 21000274.7
(22) Anmeldetag: 01.10.2021
(51) Int. Cl.: F24F 8/80, F24F 8/10, F24F 13/06, F24F 13/072, F24F 13/24, F24F 110/20, F24F 110/66, F24F 110/70, F24F 120/14, F24F 130/40

(54) **LÜFTUNGSSYSTEM MIT EINEM LUFTREINIGUNGSGERÄT FÜR EINEN RAUM EINES GEBÄUDES**

(30) Priorität: 02.10.2020 DE 202020004159 U
(71) Anmelder: Z L T Lüftungs- und Brandschutztechnik GmbH, 09387 Jahnsdorf (DE)
(72) Erfinder: Rieck, Markus, 96117 Memmelsdorf (DE)
(74) Vertreter: Findeisen Neumann Scheit Partnerschaft mbB

(57) **Zusammenfassung**

Lüftungssystem mit einem Luftreinigungsgerät für einen Raum einen Gebäudes, wobei das Luftreinigungsgerät ein Gehäuse mit einem Lufteinlass zur Aufnahme von Raumluft und einem Luftauslass zum Abführen gereinigter Raumluft aufweist und ein Raumluftstrom mit einem Gebläse des Luftreinigungsgerätes vom Lufteinlass durch das Gehäuse zum Luftauslass führbar ist, wobei eine Luftstromführung in dem Gehäuse derart ausgeführt ist, dass der Raumluftstrom zumindest eine mechanische und/oder auf Strahlung basierende und/oder physikalisch-chemische Filterstufen passiert. Aufgabe der Erfindung ist es daher, die Reinigung der Raumluft in einem Raum eines Gebäudes mit einem Luftreinigungsgerät zu verbessern und die Nachteile des Standes der Technik zu beheben. Diese Aufgabe wird dadurch gelöst, dass eine Steuereinheit zur Steuerung der Luftstromführung und/oder einer Leistung des Gebläses mit zumindest einem Sensor zur Erfassung einer Luftqualität der in dem Raum befindlichen Luft verbunden ist und dass die Steuerung der Luftstromführung und/oder der Leistung des Gebläses von der Steuereinheit anhand vom Sensor übermittelter Sensordaten erfolgt.

## Beschreibung

Die Erfindung betrifft ein Lüftungssystem mit einem Luftreinigungsgerät für einen Raum einen Gebäudes.

Aus dem Stand der Technik ist aus der US 2,507,634 A ein Lüftungssystem für einen Raum eines Restaurants bekannt. Das Lüftungssystem weist einen Lufteinlass auf, welcher durch an Tischen des Raums angebrachten Öffnungen gebildet ist. Die Raumluft, welche über die Öffnungen des Lufteinlasses eingesaugt wird, wird über Rohrleitungen aus dem Raum zur Umgebung des Gebäudes geleitet. Über weitere Rohrleitungen wird Frischluft aus der Gebäudeumgebung über oberhalb des Tisches angeordneten Öffnungen eines Luftauslasses in den Raum eingeleitet. Nachteilig ist allerdings, dass keinerlei Luftreinigung erfolgt.

Weiterhin sind Umluftgeräte zur Luftreinigung als Mobilgeräte oder Festgeräte zum Wandanbau oder zur Deckenmontage bekannt. Typischerweise liegt die Ansaugung im unteren Geräteteil und die Ausblasseite erfolgt im oberen Geräteteil vertikal oder horizontal. Typischerweise ist der Abstand dieser Geräte und Ihre Lage zu den Nutzern eines Raumes undefiniert. Der Hauptnachteil dieser Konstellation ist, dass eine Krankheitserregerübertragung über Aerosole aus der ausgeatmeten Luft von Menschen im Raum auf andere Menschen im selben Raum nicht systematisch unterbunden wird. Daran ändert auch die häufig ausgesprochene Empfehlung, mehrere Geräte in einem Raum zu platzieren, nichts Grundlegendes. Der direkte Übertragungsweg von Aerosolen im Raum, von Mensch zu Mensch, bleibt bestehen.

In der US 4,625,633 A ist ein Lüftungssystem mit einem Luftreinigungsgerät für einen Raum offenbart. Das Luftreinigungsgerät weist ein Gehäuse mit einem Lufteinlass zur Aufnahme von Raumluft und einem Luftauslass zum Abführen gereinigter Raumluft auf. Der Raumluftstrom wird mit einem Gebläse des Luftreinigungsgerätes vom Lufteinlass durch das Gehäuse zum Luftauslass geführt, wobei eine Luftstromführung in dem Gehäuse derart ausgeführt ist, dass der Raumluftstrom eine Filterstufe passiert. Der Lufteinlass wird von einzelnen Öffnungen im Gehäuse gebildet, wobei diese Öffnungen an bevorzugten Aufenthaltsorten von Personen im Raum (beispielsweise im Bereich eines Arbeitstisches) angeordnet sind. Das Gebläse kann mittels eines Schalters von einer Person im Raum ein- und ausgeschaltet werden, was lediglich eine manuelle Anpassung der Reinigung der Raumlauft ermöglicht. Eine derartige manuelle Regelung ist subjektiv und fehleranfällig, was dazu führt, dass diese nicht immer optimal auf den tatsächlichen Reinigungsbedarf der Raumluft abgestimmt ist. Ein erhöhter Reinigungsbedarf kann beispielsweise nötig sein, wenn im Raum eine kranke Person anwesend ist, was mit einem erhöhten Ausstoß an Krankheitserregern verbunden ist. Nachteilig ist weiterhin, dass das Lüftungssystem lediglich eine Umwälzung der bereits im Raum befindlichen Raumluft zulässt.

Aufgabe der Erfindung ist es daher, die Reinigung der Raumluft in einem Raum eines Gebäudes mit einem Luftreinigungsgerät zu verbessern und die Nachteile des Standes der Technik zu beheben.

Diese Aufgabe wird mit einem Lüftungssystem mit den Merkmalen des Anspruchs 1 gelöst. Vorteilhafte Ausgestaltungen finden sich in den Unteransprüchen 2 bis 16.

Nachfolgend wird ein Ausführungsbeispiel der Erfindung anhand der Zeichnungen erläutert. Es zeigen:

| | |
|---|---|
| Fig. 1 | eine Ausführung des erfindungsgemäßen Luftreinigungsgeräts an einem Tisch |
| Fig. 2 | eine weitere Ausführung des erfindungsgemäßen Luftreinigungsgeräts mit einem Lufteinlass mit mehreren Öffnungen und einem gebogenen Plattenelement zur Luftromführung |
| Fig. 3 | eine weitere Ausführung des erfindungsgemäßen Luftreinigungsgeräts mit einem als längliche Öffnung ausgeführten Lufteinlass |
| Fig. 4 | eine Ausführung des erfindungsgemäßen Luftreinigungsgeräts mit einem höhenverstellbaren Gestell |
| Fig. 5 | eine weitere Ausführung des erfindungsgemäßen Luftreinigungsgeräts mit einem zwei schräg angeordneten Öffnungen des Lufteinlasses einem geraden Plattenelement zur Luftromführung |
| Fig. 6 | eine weitere Ausführung des erfindungsgemäßen Luftreinigungsgeräts zwischen zwei Tischen |
| Fig. 7 | eine kreuzförmige Ausführung des erfindungsgemäßen Luftreinigungsgeräts |
| Fig. 8 | einen Halbschnitt des Luftreinigungsgeräts gemäß Fig. 4 |
| Fig. 9 | einen Halbschnitt des Luftreinigungsgeräts gemäß Fig. 2 |
| Fig. 10 | einen Halbschnitt des Luftreinigungsgeräts gemäß Fig. 3 |
| Fig. 11 | das erfindungsgemäße Luftreinigungsgerät mit Außenlufteinlass und Fortluftleitung |

Das erfindungsgemäße Lüftungssystem weist ein Luftreinigungsgerät auf und dient zur Reinigung der Luft insbesondere in geschlossenen Räumen. Neben der Reinigung von allgemein vorhandenen Luftschadstoffen wie Staub, Feinstaub und Pollen, dient das Gerät insbesondere dazu, die Verbreitung von Krankheitserregern, die von infizierten Personen im Raum ausgeatmet werden, auf andere Personen zu minimieren. Weiterhin wird mit dem Lüftungssystem und einer Aufstellungskonfiguration des Luftreinigungsgerätes im Raum, bei der die ausgeatmete, potentiell Krankheitserrger übertragende ausgeatmete Luft von Menschen im Raum systematisch und gerichtet erfasst und gereinigt wird, bevor sie im Raum verteilt und von anderen Menschen eingeatmet wird. Insbesondere vorteilhaft ist damit der Einsatz des erfindungsgemäßen Lüftungsgeräts in Schulzimmern, in Besprechungszimmern, in der Gastronomie, in Kinos, Theater und Büros.

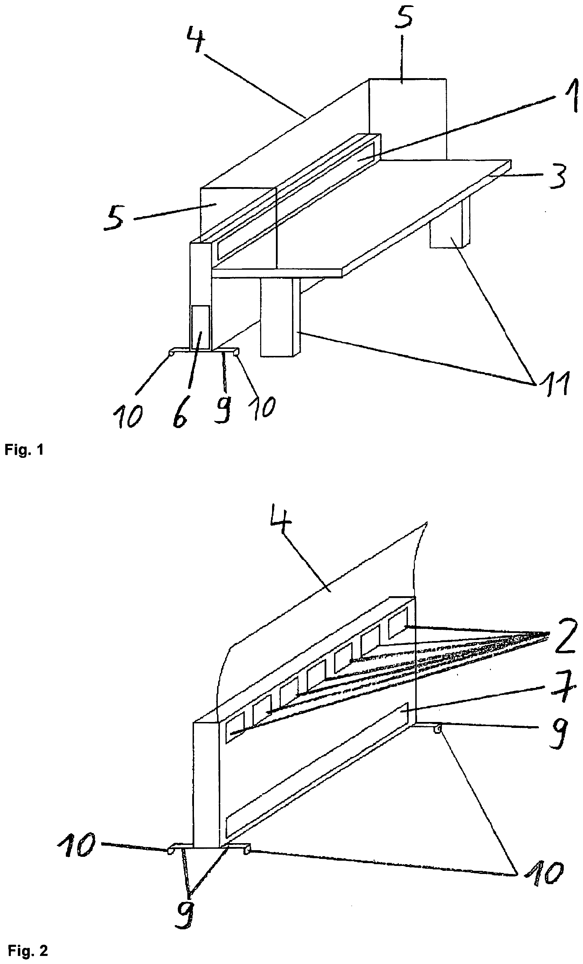

**Fig. 1** zeigt eine Ausführung des Luftreinigungsgeräts des erfindungsgemäßen Lüftungssystems, angebaut an einem Tisch. Die erfindungsgemäße Lösung sieht ein Luftreinigungsgerät vor, welches ein Gehäuse mit einem Lufteinlass 1 aufweist. Dieser Lufteinlass 1 ist in der Darstellung von länglicher Ausdehnung und hinter einer der Tischplatte 3 angeordnet, vor der ein jeweiliger Nutzer des Raumes sitzt oder steht. Der längliche Lufteinlass kann auch aus einer Anordnung von mehreren Öffnungen (Einzellufteinlässen 2) bestehen, deren Geometrie quadratisch, rechteckig, rund, oval, vieleckig ist oder aus davon abgeleiteten Geometrien besteht. **Fig. 2** zeigt eine Ausführung mit Einzellufteinlässen 2.

Zur Lenkung des zu erfassenden Luftstroms ist raumseitig über dem Lufteinlass 1 oder über den Einzellufteinlässen 2 eine gerade, geneigte oder gewölbte Platte 4 zur Luftlenkung und Trennung angeordnet ist. **Fig. 1** zeigt eine vertikal gerade angeordnete Platte 4. Die Platte 3 besteht in einer bevorzugten Ausführung aus durchsichtigem Material. **Fig. 2** zeigt eine gewölbte Platte 4.

In einer bevorzugten Variante der erfindungsgemäßen Lösung sind neben der oberen Platte weitere luftlenkende und trennende Platten links und/oder rechts am Gerät angeordnet. **Fig. 1** zeigt eine Ausführung mit je einer links und rechts angeordneten Seitenplatte 5. Zwingend sind die Platten 4, 5 allerdings nicht. Die Platte(n) 4 und die Seitenplatte(n) 5 können auch mit einer Krankheitserreger abtötenden oder Krankheitserreger abstoßenden Oberfläche ausgestattet sein.

Weiterhin sind am Gehäuse des Luftreinigungsgerätes eine oder mehrere Ausblasöffnungen als Luftauslass vorgesehen. Diese Ausblasöffnungen können nach unten, seitlich, vertikal nach oben oder in einer anderen Ebene in der gleichen Richtung wie der länglich ausgestaltete Lufteinlass 1 angeordnet sein. Die Ausblasöffnungen können mit einem Ausblasventil ausgestattet, mit einem Ausblassgitter versehen oder mit einer Ausblasblende verkleidet sein.

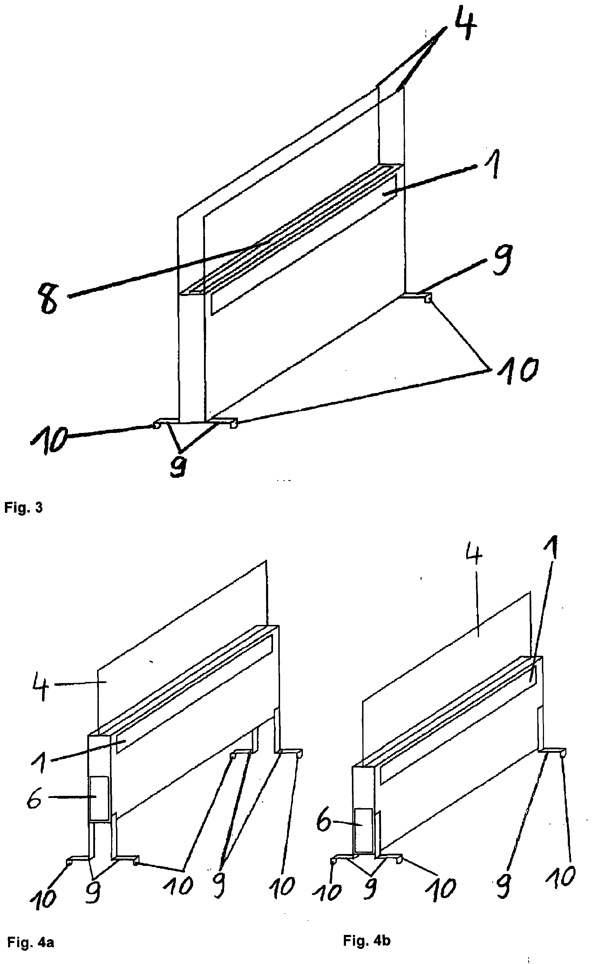

**Fig. 1** zeigt eine Ausführung mit einer seitlich angeordneten Ausblasöffnung 6. **Fig. 2** zeigt eine Ausführung mit einer in einer anderen Ebene aber in gleicher Richtung wie die Einzellufteinlässe 2 angeordneten Ausblasöffnung 7. **Fig. 3** zeigt eine Ausführung mit einer vertikal nach oben angeordneten Ausblasöffnung 8.

In einer bevorzugten Variante der erfindungsgemäßen Lösung ist das Luftreinigungsgerät mechanisch oder elektrisch höhenverstellbar und steht selbstständig auf dem Boden auf einem festen oder höhenverstellbaren Gestell 9 mit festen Füssen 10 oder mit Rädern oder mit Rollen, sodass sich die Höhe des Lufteinlasses 1 und der darüber angeordneten Platte 4 einstellen und an die Größe des Benutzers bzw. der Höhe der Tischplatte, beispielsweise für die Positionen sitzender Benutzer und stehender Benutzer, anpassen lässt. **Fig. 4a** zeigt das Luftreinigungsgerät in der obersten Position und **Fig. 4b** ein Gerät in der untersten Position, wobei das Gestell 9 höhenverstellbar ist.

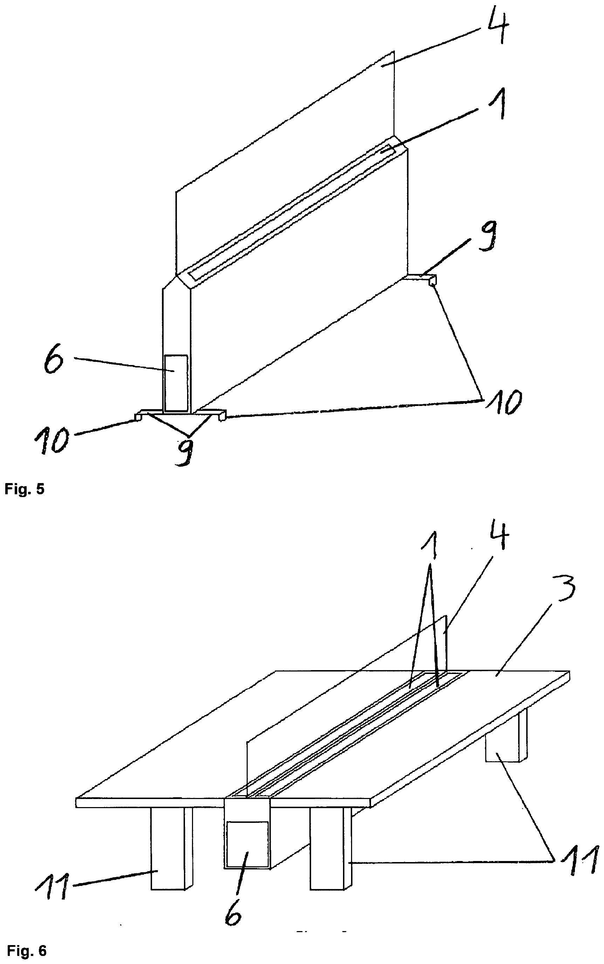

**Fig. 5** zeigt eine Ausführung mit schräg angeordnetem Lufteinlass 1.

In einer weiteren bevorzugten Variante der erfindungsgemäßen Lösung besitzt das Luftreinigungsgerät zwei gegenüberliegende länglich ausgestaltete Lufteinlässe 1 mit zwei je davor angeordneten Tischen oder einem Tisch, der eine Aussparung für den oberen Teil des Gehäuses des Lüftungsgeräts hat, so dass sich Menschen gegenüber sitzen oder stehen können, Sichtkontakt haben, die jeweils ausgeatmete Luft jedoch nicht beim Gegenüber ankommt, sondern vom erfindungsgemäßen Lüftungsgerät erfasst, abgesaugt und gereinigt wird.

**Fig. 6** zeigt eine Ausführung, bei der zwei Lufteinlässe 1 horizontal auf Höhe der Tischplatte 3 links und rechts von der Platte 3 angeordnet sind und Gerät und Tisch als eine Einheit miteinander verbunden sind, wobei das Luftreinigungsgerät kein eigenes Gestell 9 und keine eigenen Füße 10 hat, sondern die ganze Einheit von den Tischfüssen 11 getragen wird.

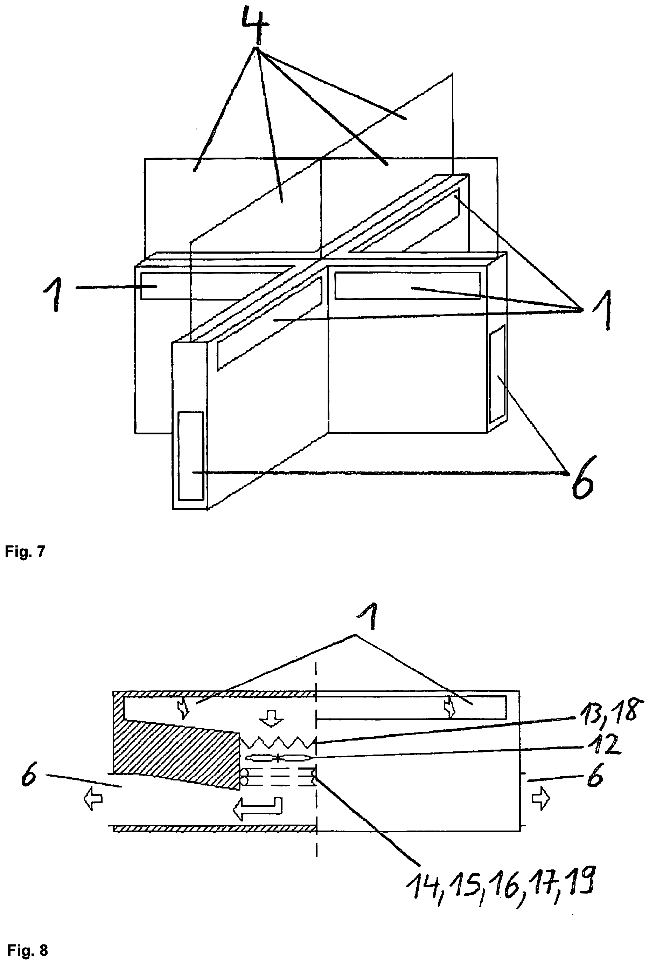

Es sind Ausgestaltungen für quadratische, rechteckige, vieleckige, runde, ovale oder anderweitig gestaltete Tischformen möglich. **Fig. 7** zeigt eine Anordnung für vier Absaugbereiche zwischen den jeweiligen Schenkeln des kreuzförmig ausgebildeten Luftreinigungsgeräts mit 8 Stück Lufteinlässen 1 und vier Stück seitlich angeordneten Ausblasöffnungen 6.

In einer bevorzugten Variante der erfindungsgemäßen Lösung sind die außenliegenden Oberflächen des Lüftungsgeräts, der Platte und/oder die innenliegenden Oberflächen der luftführenden Teile mit einer antibakteriellen/antiviralen Beschichtung ganz oder in Teilen versehen.

Im Gerät befinden sich in bevorzugter Ausführung eine oder mehrere mechanische Filterstufen 13, eine oder mehrere UV-Licht Bestrahlungsstrecken 14 zur Abtötung der im Luftstrom enthaltenen Krankheitserreger, eine oder mehrere Befeuchtungseinrichtungen 15 zur Befeuchtung des Luftstroms, eine oder mehrere Trocknungseinrichtungen 16 zur Trocknung des Luftstroms, eine oder mehrere Temperiereinrichtungen 17 zur Erwärmung oder Kühlung des Luftstroms, ein oder mehrere Aktivkohlefilter 18 zur mechanischen oder chemisch-physikalischen Reinigung des Luftstroms und/oder eine oder mehrere lonisationsstufen 19 zur Ionisierung des Luftstroms. Jedes Gerät kann nur eine oder eine Kombination aus mehreren der vorgenannten Luftbehandlungseinrichtungen enthalten. Daneben ist ein bevorzugt elektrisch angetriebenes Gebläse 12 im Gerät angeordnet, das die Luft durch den Lufteinlass 1 oder eine Reihe von Einzellufteinlässen 2 einsaugt, durch die eine oder mehrere Luftbehandlungseinrichtungen befördert, und dann durch die Ausblasöffnungen 6, 7 oder 8 wieder ausbläst. Weiterhin können im Gerät Schalldämpfer 20 im Luftstrom angeordnet sein. Das Gehäuse des Geräts kann aus schalldämmendem Material bestehen oder mit schalldämmendem Material ausgekleidet sein.

**Fig. 8** zeigt im Halbschnitt ein Luftreinigungsgerät gemäß **Fig. 4**. Rechts ist das Gerät in der Vorderansicht gezeigt, links in der Schnittansicht schematisch die innenliegenden Komponenten sowie die Luftführung (Pfeile).

**Fig. 9** zeigt im Halbschnitt ein Luftreinigungsgerät gemäß **Fig. 2**. Rechts ist das Gerät in der Vorderansicht gezeigt, links in der Schnittansicht schematisch die innenliegenden Komponenten sowie die Luftführung (Pfeile). Die Schalldämpfer 20 sind in der in **Fig. 9** gezeigten erfindungsgemäßen Ausführung des Luftreinigungsgeräts beispielhaft vertikal im nach unten gerichteten Luftstrom nach den Luftbehandlungseinrichtungen 14 , 15 , 16 , 17 , 19 und vor der Ausblasöffnung 7 angeordnet.

**Fig. 10** zeigt im Halbschnitt ein Luftreinigungsgerät gemäß **Fig. 3**. Rechts ist das Gerät in der Vorderansicht gezeigt, links in der Schnittansicht schematisch die innenliegenden Komponenten sowie die Luftführung.

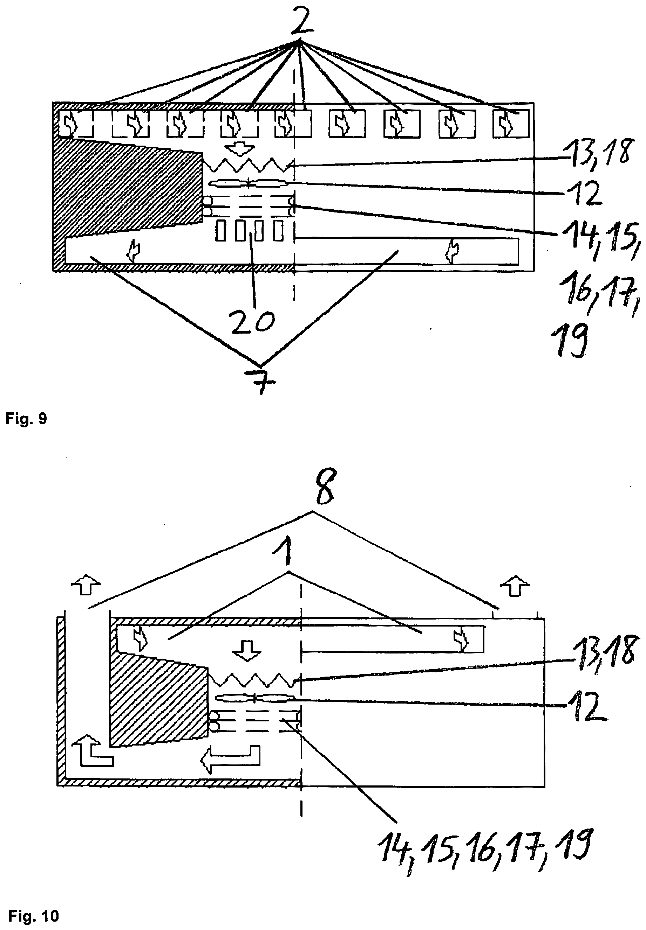

Wie in **Fig. 8**, **Fig. 9** und **Fig. 10** gezeigt, wird ein Raumluftstrom mit dem Gebläse von dem Lufteinlass (bzw. den Einzellufteinlässen) durch das Gehäuse des Luftreinigungsgerätes zum Luftauslass (bzw. den Einzelluftauslässen) geführt. Die Luftstromführung in dem Gehäuse ist derart ausgeführt, dass der Raumluftstrom zumindest eine mechanische und/oder auf Strahlung basierende und/oder physikalisch-chemische Filterstufe passiert. Damit wird an dem Lufteinlass aus dem Raum eintretende (verschmutzte) Raumluft aufgenommen und nach dem Durchlaufen des Gehäuses des Luftreinigungsgerätes als gereinigte Raumluft über den Luftauslass wieder in den Raum geleitet.

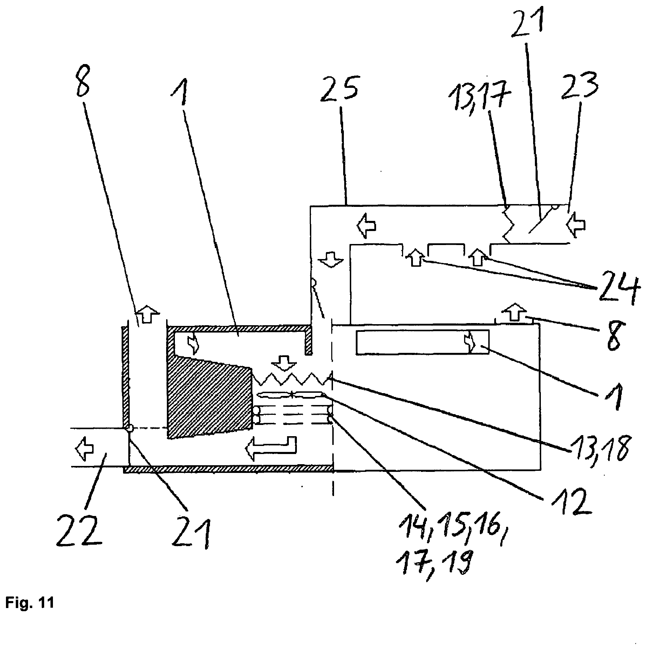

**Fig. 11** zeigt das erfindungsgemäße Luftreinigungsgerät mit weiteren externen Lufteinlässen 24, einem Außenlufteinlass 23 mit Regelklappe 21, einem eigenen Filter 13 und einer eigenen Temperiereinrichtung 17 im Halbschnitt. Rechts ist die Vorderansicht gezeigt, links die Schnittansicht. Weiterhin ist das in **Fig. 11** gezeigte erfindungsgemäße Luftreinigungsgerät mit einer Fortluftleitung 22 ausgestattet und einer Regeklappe 21 an der Fortluftleitung 22, mit der die Aufteilung des Abluftstroms zwischen Ausblasöffnung 8 und Fortluftleitung 22 eingestellt wird. Optional kann in die Fortluftleitung auch eine Energierückgewinnungseinrichtung installiert werden, die zur Gewinnung von Wärme den Fortluftstrom abkühlt und zur Gewinnung von Kälte den Fortluftstrom erwärmt.

Der Außenlufteinlass 23 dient der Aufnahme von aus der Gebäudeumgebung über eine Rohrleitung 25 zugeführter Außenluft (Außenluftstrom). Die Luftstromführung in dem Gehäuse ist derart ausgeführt, dass der Außenluftstrom und der Raumluftstrom vor dem Passieren des mechanischen und/oder auf Strahlung basierenden und/oder physikalisch-chemischen Filters als Mischstrom zusammengeführt und nach dem Passieren des mechanischen und/oder auf Strahlung basierenden und/oder physikalisch-chemischen Filters zumindest teilweise über den Luftauslass bzw. die Luftauslässe in den Raum geleitet werden. Vorteilhafterweise werden die Volumenströme des Außenluftstroms, des Raumluftstroms und des aus Außenluftstrom und Raumluftstrom gebildeten Mischstrom im Verhältnis zueinander nur durch die Strömungswiderstände bestimmt oder sind durch Regelklappen 21 einstellbar. Der Außenluftstrom wird optional vor der Bildung des Mischstroms durch zumindest einen weiteren Filter 13 gefiltert und durch eine Temperiereinrichtung 17 erwärmt oder gekühlt.

Die Fortluftleitung dient der Abführung eines Fortluftstroms aus dem Gehäuse zur Gebäudeumgebung oder in einen weiteren Raum des Gebäudes. Die Luftstromführung ist derart ausgeführt, dass der Raumluftstrom oder der aus Außenluftstrom und Raumluftstrom gebildete Mischstrom nach dem Passieren des mechanischen und/oder auf Strahlung basierenden und/oder physikalisch-chemischen Filters in den Fortluftstrom und den über den Luftauslass in den Raum geführten Raumluftstrom aufgeteilt wird. Die Aufteilung der Volumenströme bestimmt sich nur durch die Strömungswiderstände oder wird durch eine oder mehrere Regelklappen 21 eingestellt.

Die Steuerung des Gebläses sieht das Ein-/Ausschalten vor. Darüber hinaus wird auch die Leistung des Gebläses 12 in Stufen oder stufenlos geregelt. Daneben können Überwachungsfunktionen mit entsprechenden Statusfunktionen für das Gebläse 12 und die Luftbehandlungseinrichtungen 14, 15, 16, 17, 19 sowie die Filter 13, 18 eingebaut werden. Bei den Filtern 13, 18 kann das in einer bevorzugten Ausführung die Überwachung der Filterverschmutzung durch die Messung des Differenzdruckes zwischen zwei Messpunkten, einem vor und einem nach dem Filter, erfolgen.

Die Steuerung des Geräts kann von Hand am Gerät an Tasten, Touchscreen oder Gestensteuerung, mittels Fernbedienung oder Smartgeräte-App benutzerkontrolliert und auch zeitgesteuert erfolgen. Zusätzlich ist erfindungsgemäß eine sensorbasierte Steuerung der Leistung des Gebläses und/oder der Luftstromführung (beispielsweise der Regelklappen 21) vorgesehen. Hierzu ist eine Steuereinheit zur Steuerung der Luftstromführung und/oder der Leistung des Gebläses mit zumindest einem Sensor zur Erfassung einer Luftqualität der in dem Raum befindlichen Luft verbunden, wobei die Steuereinheit derart ausgeführt ist, dass die Steuerung der Luftstromführung und/oder der Leistung des Gebläses vom Sensor übermittelter Sensordaten erfolgt. Der Sensor zur Erfassung der Luftqualität in dem Raum weist zumindest einen Sensor zur Erkennung der Luftfeuchte und/oder des CO2-Gehalt der Luft und/oder des VOC-Gehalts der Luft und/oder des Staubgehalts der Luft und/oder der Lufttemperatur und/oder zur Anzahlerfassung von im Raum anwesenden Personen und/oder zur Erfassung von Krankheitssymptomen von im Raum anwesenden Personen auf.

Die Steuerung kann auch umschaltbar von Hand bzw. ferngesteuert auf sensorbasiert erfolgen. Daneben ist auch eine Kombination mit einer Zeitsteuerung realisierbar. Die jeweiligen Sensoren sind im Luftreinigungsgerät oder im Raum außerhalb des Luftreinigungsgerätes installiert und kommunizieren mit der Steuereinheit des Luftreinigungsgeräts bevorzugt über Funk. Auch eine kabelgebundene Kommunikation ist möglich.

In einer vorteilhaften Ausführung sieht die Steuerung das sensorgestützte schnelle Erkennen eines erhöhten Absaugbedarfs, wenn Personen im Geräteumfeld bzw. im Raum niesen oder husten, vor. Durch eine Geräusch- und/oder Druckwellenerkennung und/oder optische Erkennung wird die Absaugleistung des Gerätes unverzüglich erhöht, sobald ein Mikrofon und/oder ein Drucksensor und/oder eine Kamera und eine entsprechende Auswertelektronik Nies- oder Hustengeräusche bzw. durch Husten/Niesen verursachte Druckänderungen bzw. Nies- oder Hustbewegungen detektiert. Für eine Steuerung der Absaugleistung kann die Leistung des Gebläses und/oder die Öffnungsstellung der Regelklappen variiert werden. Hierzu weist das Luftreinigungsgerät eine (nicht dargestellte) Steuereinheit auf, wobei die Steuerung der Leistung des Gebläses 12 mit dem Sensor zur Erfassung von Krankheitssymptomen von im Raum anwesenden Personen verbunden ist. Dieser Sensor weist zumindest einen Drucksensor auf, wobei dieser Drucksensor ausgebildet ist, ein Niesen oder Husten von in dem Raum befindlichen Personen zu detektieren und daraufhin die Leistung des Gebläses 12 mittels der Steuerung für eine einstellbare Zeit zu erhöhen. Ergänzend oder alternativ ist die Steuerung der Leistung des Gebläses 12 mit zumindest einer Kamera verbunden, wobei diese Kamera ausgebildet ist, ein Niesen oder Husten von in dem Raum befindlichen Personen zu detektieren und daraufhin die Leistung des Gebläses 12 mittels der Steuerung für eine einstellbare Zeit zu erhöhen. Weiterhin ist ergänzend oder alternativ die Steuerung der Leistung des Gebläses 12 mit zumindest einem Geräuschdetektor zur Geräuscherfassung von im Raum anwesenden Personen verbunden, wobei dieser Geräuschdetektor ausgebildet ist, eine durch Niesen oder Husten von in dem Raum befindlichen Personen erzeugte Schallemission zu detektieren und daraufhin die Leistung des Gebläses 12 mittels der Steuerung für eine einstellbare Zeit zu erhöhen.

Die Steuerung der Luftstromführung kann die Steuerung der Regelklappen 21 umfassen, wobei die Steuerung der Regelklappen 21 derart ausgeführt ist, dass anhand der Detektion eines Niesens oder Hustens von in dem Raum befindlichen Personen mittels diesem Drucksensor eine Einstellung der Öffnung der Regelklappen 21 durch die Steuerung erfolgt. Ergänzend oder alternativ ist die Steuerung der Regelklappen 21 mit der zumindest einen Kamera verbunden, wobei die Steuerung der Regelklappen 21 derart ausgeführt ist, dass anhand der Detektion eines Niesens oder Hustens von in dem Raum befindlichen Personen mittels dieser Kamera eine Einstellung der Öffnung der Regelklappen 21 durch die Steuerung erfolgt. Ebenfalls ergänzend oder alternativ ist die Steuerung der Regelklappen 21 mit dem zumindest einen Geräuschdetektor zur Geräuscherfassung von im Raum anwesenden Personen verbunden, wobei die Steuerung der Regelklappen 21 derart ausgeführt ist, dass anhand der Detektion eines Niesens oder Hustens von in dem Raum befindlichen Personen mittels dieses Geräuschdetektors eine Einstellung der Öffnung der Regelklappen 21 durch die Steuerung erfolgt.

Der Drucksensor, die Kamera und der Geräuschdetektor sind in den Darstellung nicht gezeigt.

Neben der UV-Licht Bestrahlungsstrecke 14 des durch das Gerät strömende Luftstroms ist in einer bevorzugten Variante des Geräts auch eine UV-Bestrahlung der Filter 13, 18 vorgesehenen, die die Krankheitserreger, die an den Filtern 13, 18 gesammelt werden, unschädlich machen. Die erfindungsgemäßen UV-Bestrahlungseinheiten für die Filter 13, 18 können kontinuierlich oder intermittierend arbeiten.

### Bezugszeichen liste

- 1: Lufteinlass
- 2: Einzellufteinlass
- 3: Tischplatte
- 4: Platte
- 5: Seitenplatte
- 6: seitlich angeordnete Ausblasöffnung
- 7: Ausblasöffnung in anderer Ebene wie Lufteinlass 1 bzw. Einzellufteinlass 2
- 8: vertikal nach oben angeordnete Ausblasöffnung
- 9: Gestell
- 10: Fuss
- 11: Tischfuss
- 12: Gebläse
- 13: mechanische Filter
- 14: UV-Licht Bestrahlungsstrecke
- 15: Befeuchtungseinrichtung
- 16: Trocknungseinrichtung
- 17: Temperiereinrichtung
- 18: Aktivkohlefilter
- 19: lonisationsstufe
- 20: Schalldämpfer
- 21: Regelklappe
- 22: Fortluftleitung
- 23: Aussenlufteinlass
- 24: externer Lufteinlass
- 25: Rohrleitung

## Patentansprüche

1. Lüftungssystem mit einem Luftreinigungsgerät für einen Raum einen Gebäudes, wobei das Luftreinigungsgerät ein Gehäuse mit einem Lufteinlass zur Aufnahme von Raumluft und einem Luftauslass zum Abführen gereinigter Raumluft aufweist und ein Raumluftstrom mit einem Gebläse des Luftreinigungsgerätes vom Lufteinlass durch das Gehäuse zum Luftauslass führbar ist, wobei eine Luftstromführung in dem Gehäuse derart ausgeführt ist, dass der Raumluftstrom zumindest eine mechanische und/oder auf Strahlung basierende und/oder physikalisch-chemische Filterstufe passiert, **dadurch gekennzeichnet, dass** eine Steuereinheit des Lüftungssystems zur Steuerung der Luftstromführung und/oder einer Leistung des Gebläses mit zumindest einem Sensor zur Erfassung einer Luftqualität der in dem Raum befindlichen Luft verbunden ist und dass die Steuereinheit derart ausgeführt ist, dass die Steuerung der Luftstromführung und/oder der Leistung des Gebläses anhand vom Sensor übermittelter Sensordaten erfolgt.

2. Lüftungssystem nach Anspruch 1, **dadurch gekennzeichnet, dass** die zumindest eine mechanische Filterstufe ein Aktivkohlefilter (18) ist und/oder dass die auf Strahlung basierende Filterstufe eine UV-Lichtquelle zur Abtötung von Krankheitserregern aufweist und/oder dass die physikalisch-chemische Filterstufe eine lonisationsstufe (19) aufweist und/oder dass im Gehäuse zumindest ein Schalldämpfer (20) zur Verringerung einer von der im Gehäuse strömenden Luft verursachten Schallemission aufweist und/oder dass in dem Gehäuse eine Vorrichtung zur Veränderung des Feuchtegehalts des Luftstroms im Gehäuse integriert ist.

3. Lüftungssystem nach einem der vorgenannten Ansprüche, **dadurch gekennzeichnet, dass** der Sensor zur Erfassung einer Luftqualität zumindest einen Sensor zur Erkennung der Luftfeuchte und/oder des CO2-Gehalt der Luft und/oder des VOC-Gehalts der Luft und/oder des Staubgehalts der Luft und/oder der Lufttemperatur und/oder zur Anzahlerfassung von im Raum anwesenden Personen und/oder zur Erfassung von Krankheitssymptomen von im Raum anwesenden Personen aufweist.

4. Lüftungssystem nach Anspruch 3, **dadurch gekennzeichnet,**
**dass** der Sensor zur Erfassung von Krankheitssymptomen zumindest einen Drucksensor aufweist und dieser Drucksensor ausgebildet ist, ein Niesen oder Husten von in dem Raum befindlichen Personen zu detektieren und daraufhin die Leistung des Gebläses (12) mittels der Steuerung für eine einstellbare Zeit zu erhöhen und/oder
**dass** der Sensor zur Erfassung von Krankheitssymptomen zumindest eine Kamera aufweist und dass diese Kamera ausgebildet ist, ein Niesen oder Husten von in dem Raum befindlichen Personen zu detektieren und daraufhin die Leistung des Gebläses (12) mittels der Steuerung für eine einstellbare Zeit zu erhöhen und/oder dass der Sensor zur Erfassung von Krankheitssymptomen zumindest einen Geräuschdetektor zur Geräuscherfassung von im Raum anwesenden Personen aufweist und dass dieser Geräuschdetektor ausgebildet ist, eine durch Niesen oder Husten von in dem Raum befindlichen Personen erzeugte Schallemission zu detektieren und daraufhin die Leistung des Gebläses (12) mittels der Steuerung für eine einstellbare Zeit zu erhöhen.

5. Lüftungssystem nach einem der vorgenannten Ansprüche, **dadurch gekennzeichnet, dass** das Gehäuse einen Außenlufteinlass (23) zur Aufnahme von aus der Gebäudeumgebung über eine Rohrleitung (25) zugeführter Außenluft aufweist und dass die Luftstromführung in dem Gehäuse derart ausgeführt ist, dass der Außenluftstrom und der Raumluftstrom vor dem Passieren des mechanischen und/oder auf Strahlung basierenden und/oder physikalisch-chemischen Filters als Mischstrom zusammengeführt und nach dem Passieren des mechanischen und/oder auf Strahlung basierenden und/oder physikalisch-chemischen Filters zumindest teilweise über den Luftauslass in den Raum geleitet werden.

6. Lüftungssystem nach Anspruch 5, **dadurch gekennzeichnet,**
**dass** die Volumenströme des Außenluftstroms, des Raumluftstroms und der aus Außenluftstrom und Raumluftstrom gebildete Mischstrom im Verhältnis zueinander sich nur durch die Strömungswiderstände bestimmt oder durch Regelklappen (21) einstellbar ist.

7. Lüftungssystem nach Anspruch 6, **dadurch gekennzeichnet,**
**dass** der Außenluftstrom vor der Bildung des Mischstroms durch zumindest einen weiteren Filter (13) gefiltert und durch eine Temperiereinrichtung (17) erwärmt oder gekühlt wird.

8. Lüftungssystem nach einem der vorgenannten Ansprüche, **dadurch gekennzeichnet,**
**dass** das Gehäuse mit einer Fortluftleitung zur Abführung eines Fortluftstroms aus dem Gehäuse zur Gebäudeumgebung oder in einen weiteren Raum des Gebäudes verbunden ist und dass die Luftstromführung derart ausgeführt ist, dass der Raumluftstrom oder der aus Außenluftstrom und Raumluftstrom gebildete Mischstrom nach dem Passieren des mechanischen und/oder auf Strahlung basierenden und/oder physikalisch-chemischen Filters in den Fortluftstrom und den über den Luftauslass in den Raum geführten Raumluftstrom aufgeteilt wird und dass die Aufteilung sich nur durch die Strömungswiderstände bestimmt oder durch eine oder mehrere Regelklappen (21) eingestellt wird.

9. Lüftungssystem nach Anspruch 8, **dadurch gekennzeichnet,**
**dass** in der Fortluftleitung eine Energierückgewinnungseinrichtung zur Energierückgewinnung aus dem Fortluftstrom integriert ist.

10. Lüftungssystem nach einem der vorgenannten Ansprüche, **dadurch gekennzeichnet,**
**dass** der Raumluftstrom oder der aus Außenluftstrom und Raumluftstrom gebildete Mischstrom neben dem mechanischen und/oder auf Strahlung basierenden und/oder physikalisch-chemischen Filter weiterhin zumindest eine Temperierstufe und/oder zumindest eine Befeuchtungsstufen und/oder zumindest eine Trocknungsstufen passiert.

11. Lüftungssystem nach einem der Ansprüche 6 bis 10, **dadurch gekennzeichnet, dass**
eine Steuerung der Regelklappen (21) mit dem zumindest einen Drucksensor verbunden ist und die Steuerung der Regelklappen (21) derart ausgeführt ist, dass anhand der Detektion eines Niesens oder Hustens von in dem Raum befindlichen Personen mittels diesem Drucksensor eine Einstellung der Öffnung der Regelklappen (21) durch die Steuerung erfolgt und/oder
dass die Steuerung der Regelklappen (21) mit der zumindest einen Kamera verbunden ist und die Steuerung der Regelklappen (21) derart ausgeführt ist, dass anhand der Detektion eines Niesens oder Hustens von in dem Raum befindlichen Personen mittels dieser Kamera eine Einstellung der Öffnung der Regelklappen (21) durch die Steuerung erfolgt und/oder
dass die Steuerung der Regelklappen (21) mit dem zumindest einen Geräuschdetektor zur Geräuscherfassung von im Raum anwesenden Personen verbunden ist und die Steuerung der Regelklappen (21) derart ausgeführt ist, dass anhand der Detektion eines Niesens oder Hustens von in dem Raum befindlichen Personen mittels dieses Geräuschdetektors eine Einstellung der Öffnung der Regelklappen (21) durch die Steuerung erfolgt.

12. Lüftungssystem nach einem der vorgenannten Ansprüche, **dadurch gekennzeichnet, dass** raumseitig an dem Lufteinlass zumindest ein Plattenelement vorgesehen ist und dieses zumindest eine Plattenelemente derart ausgeführt ist, von in dem Raum befindlichen Personen ausgeatmete Luft in Richtung Lufteinlass zu leiten und/oder dass der Luftauslass (8) mit einem Ausblasventil oder mit einem Ausblassgitter oder mit einer Ausblasblende ausgestattet ist.

13. Lüftungssystem nach einem der vorgenannten Ansprüche, **dadurch gekennzeichnet, dass** der Lufteinlass (1) von einer oder mehr Öffnungen im Gehäuse gebildet ist und/oder dass der Luftauslass von einer oder Öffnungen im Gehäuse gebildet wird.

14. Lüftungssystem nach einem der vorgenannten Ansprüche, **dadurch gekennzeichnet, dass** das Lüftungsgerät an einer Tischplatte eines in dem Raum befindlichen Tisches angeordnet oder in der Tischplatte integriert ist und dass der Lufteinlass (1) in Höhe und Richtung so an oder in der Tischplatte angeordnet ist, dass die von einer an dem Tisch in Arbeitsposition befindlichen Person ausgeatmete Luft direkt erfasst und einsaugt wird.

15. Lüftungssystem nach Anspruch 14, **dadurch gekennzeichnet, dass** das Lüftungsgerät zwischen zwei Tischen angeordnet ist und jedem Tisch eine Öffnung des Lufteinlasses (1) zugeordnet ist und dass die Öffnungen des Lufteinlasses jeweils in der Ebene der zugeordneten Tischplatte oder oberhalb der Ebene der zugeordneten Tischplatte oder unterhalb der Ebene der zugeordneten Tischplatte angeordnet sind und/oder dass das Gehäuse des Lüftungsgerätes gegenüber einer Aufstellfläche des Tisches höhenverstellbar ist, sodass die Höhe der Öffnungen des Lufteinlasses an die Höhe der zugeordneten Tischplatte anpassbar ist.

16. Lüftungssystem nach Anspruch 14, **dadurch gekennzeichnet, dass** das Lüftungsgerät in einem Ausbruch in der Tischplatte (3) integriert ist und dass der Lufteinlass (1) in der Ebene der Tischplatte oder oberhalb der Ebene der Tischplatte oder unterhalb der Ebene der Tischplatte angeordnet ist.

17. Lüftungssystem nach einem der vorgenannten Ansprüche, **dadurch gekennzeichnet, dass** luftführende Oberflächen im Gehäuse und/oder dem Raum zugewandte Außenoberflächen des Gehäuses mit einer Krankheitserreger abtötenden oder Krankheitserreger abstoßenden Beschichtung ausgestattet sind.
